# EUROPÄISCHE PATENTANMELDUNG

(11) **EP 2 759 861 A1**
(43) Veröffentlichungstag der Anmeldung: **30.07.2014**
(21) Anmeldenummer: 14161407.3
(22) Anmeldetag: 28.12.2010
(51) Int. Cl.: G02B 6/44, H04J 14/02, H04Q 1/02

(54) **Anschlussdose für faseroptische Verbindung.**

(30) Priorität: 30.12.2009 CH 20082009
(62) Teilanmeldung aus: 10798135.9
(71) Anmelder: CATV Holding AG, 6300 Zug (CH)
(72) Erfinder: Portmann, Patrick, 4132 Muttenz (CH)
(74) Vertreter: Braun, André jr.

(57) **Zusammenfassung**

Es ist ein Gehäuse für eine Anschlussdose (1) mit mindestens einem Verbindungsanschluss (101) für faseroptische Verbindung (10) eines glasfaserbasierten Verteilnetzes (Fiber-To-The-Home, FTTH) vorgesehen. Das Gehäuse (40) umfasst einen Gehäusekörper (403) mit seitlichen Rahmenelementen (4031), eine Gehäuserückwand (401) und eine Gehäuseabdeckplatte (402). Der Gehäusekörper (403) umfasst Aufnahme- und/oder Befestigungsmittel für eine optoelektronische Empfangseinheit (20) der Anschlussdose (1). Das Gehäuse weist mindestens eine Öffnung (4032) zum Herausführen eines elektrischen Verbindungsanschlusses (201) der Empfangseinheit (20) auf.

## Beschreibung

Die Erfindung betrifft ein Gehäuse für eine Anschlussdose für faseroptische Verbindung gemäss dem Oberbegriff des unabhängigen Anspruchs 1 sowie eine Verwendung eines solchen Gehäuses für eine Anschlussdose.

### Beschreibung

Anschlussdosen für faseroptische Verbindung eines glasfaserbasierten Verteilnetzes, bzw. Fibre-To-The-Home (FTTH) sind allgemein bekannt. Sie weisen mindestens einen optischen Leiter, welcher zur Übertragung von Datensignalen mittels Wellenlängenmultiplexverfahren auf optischen Übertragungskanälen eines Übertragungsbands ausgebildet ist, wobei der optische Leiter mit einem Verbindungsanschluss der Anschlussdose verbindbar ist, so dass ein Endgerät, bspw. ein Kommunikationsmitteln für Daten, Sprache, TV etc., an das Verteilnetz angeschlossen werden kann.

Aus dem Stand der Technik sind Anschlussdosen bekannt, welche als Auf- oder Unterputzdosen bspw. an einer Wand montiert werden. Zwischen Verteilnetz und Endgerät, bspw. ein zum Empfang von analogen Sendern ausgebildeten Fernsehgerät werden etwa Optical Receiver Module (OCR) zwischengeschaltet. Derartige Empfangsmodule finden üblicherweise Anwendung für CATV, SAT Zwischenfrequenz (ZF) Verteilung, Hybrid Fibre Coax (HFC) und Fibre-To-The-x (FTTx) Knoten. Die Anschlussdosen weisen dazu entsprechende Verbindungsanschlüsse auf, mittels welchen ein OCR mit der faseroptischen Verbindung verbunden werden kann.

Als nachteilig bei derartigen Anschlussdosen hat sich erwiesen, dass an den Anschlüssen oft proprietäre Steckverbinder angeordnet und/oder proprietäre Signale verfügbar gemacht werden. Als Nachteil sind sodann kostenintensive Endgeräte zur Umsetzung der proprietären Signale im Home-Bereich zu nennen.

Es ist daher eine Aufgabe der vorliegenden Erfindung, ein Gehäuse für eine Anschlussdose vorzuschlagen, welche die Nachteile des Stands der Technik nicht aufweist. Insbesondere soll eine kostengünstige und universelle Anschlussdose für FTTH-Netzwerke realisiert werden, welche offene Standards bei Verbindungsanschlüssen und Signalen berücksichtigt.

Insbesondere werden die Ziele der Erfindung erreicht durch ein Gehäuse einer Anschlussdose mit mindestens einem Verbindungsanschluss für faseroptische Verbindung eines glasfaserbasierten Verteilnetzes (Fiber-To-The-Home, FTTH), wobei das Gehäuse einen Gehäusekörper mit seitlichen Rahmenelementen, eine Gehäuserückwand und eine Gehäuseabdeckplatte umfasst. Der Gehäusekörper umfasst Aufnahme- und/oder Befestigungsmittel für eine optoelektronische Empfangseinheit der Anschlussdose und das Gehäuse weist mindestens eine Öffnung zum Herausführen eines elektrischen Verbindungsanschlusses der Empfangseinheit auf.

Die Aufnahme- und/oder Befestigungsmittel des Gehäusekörpers können als Schalen-, Rippen- oder Stegelemente ausgebildet sein. Gehäusekörper, Gehäuserückwand und Gehäuseabdeckplatte können lösbar mittels Verbindungsmitteln, bspw. Schrauben oder Schnappverbindungen, miteinander verbunden sein. Dabei kann die Gehäuserückwand zur Montage des Gehäuses als metallische Montageplatte mit mehreren Bohrungen ausgebildet sein.

Das Gehäuse eignet sich insbesondere für eine Anschlussdose für faseroptische Verbindung eines glasfaserbasierten Verteilnetzes (Fibre-To-The-Home, FTTH), mit mindestens einem optischen Leiter, welcher zur Übertragung von Datensignalen mittels Wellenlängenmultiplexverfahren auf optischen Übertragungskanälen eines Übertragungsbands ausgebildet ist, wobei der optische Leiter mit einem Verbindungsanschluss der Anschlussdose verbindbar ist, wobei die Anschlussdose eine optoelektronische Empfangseinheit umfasst, welche ein Filtermodul zum Filtern des optischen Übertragungsbands in ein erstes optisches Teilband und mindestens ein weiteres optisches Teilband umfasst, wobei die Empfangseinheit zum Bereitstellen des weiteren optischen Teilbands mit einem Verbindungsanschluss der Anschlussdose verbunden ist, wobei die Empfangseinheit ein Wandlermodul zum Generieren eines entsprechenden elektrischen Nutzsignals basierend auf dem optischen Datensignal des gefilterten ersten Teilbands umfasst, wobei die Empfangseinheit zum Bereitstellen des elektrischen Nutzsignals mit einem Verbindungsanschluss der Anschlussdose verbunden ist, wobei mindestens eine weitere Faser der faseroptischen Verbindung durch die Anschlussdose hindurch schlaufbar ist und mit einem faseroptischen Verbindungsanschluss derselben verbunden ist, wobei im Betrieb mittels der weiteren Faser ungefiltertes optisches Übertragungsband verfügbar ist.

Einer der Vorteile der Erfindung besteht darin, dass einerseits eine als OCR ausgebildete Empfangseinheit vorhanden ist und andererseits Lichtwellenleiter an Verbindungsanschlüssen der Anschlussdose herausgeführt werden. Die Empfangseinheit stellt eine Bandbreite von 2.4 GHz bei typischen 46 dB CNR für NTSC zur Verfügung, wobei OMI bei einem optischen Eingang von -8 dBm bei 1550 nm Leistung 4% beträgt. Der RF Ausgangssignal beträgt ca. 20 dBmV (-5 dBm, 1550 nm, OMI beträgt 4%). Bei geringem Strombedarf ist eine kleine Baugrösse realisierbar. Zudem umfasst die Empfangseinheit vorzugsweise zwei single-mode optical fibre (SMF) Pigtails, wobei eine Faser bzw. ein Pigtail am Eingang und eine Faser bzw. ein Pigtail am Ausgang der Empfangseinheit vorhanden sind. Als Pigtail wird üblicherweise ein kurzes Stück Lichtwellenleiter bezeichnet, welches einseitig mit einem Lichtwellenleiter-Stecker, bspw. SC-, LC- oder kompatiblen Steckverbinder, vorkonfektioniert ist. Die Ausgangsspannung kann mittels eines Kontrollsignals DBL unterdrückt bzw. ausgeschaltet werden. Einer der Vorteile der Erfindung besteht darin, dass die Anschlussdose eine leistungsfähige Empfangseinheit für mehrere hundert Fernsehkanäle aufweist, dies bei gleichzeitig geringer Baugrösse. Sie ist sehr platzsparend ausgebildet. Die Anschlussdose ist ohne grösseren Aufwand montierbar.

Ein weiterer Vorteil der Erfindung besteht darin, dass parallel zum an der Anschlussdose verfügbaren analogen Nutzsignal auch die Übertragungsbänder weiterer Fasern an Verbindungsanschlüssen verfügbar sind. Jedes optische Übertragungsband zur Übertragung von Datensignalen kann gemäss dem als standardisiertes Modell für Netzwerkprotokolle der "International Organization for Standardization" bekannten OSI-Modell (ISO, www.iso.org) der Ebene 1 (Layer 1) zugeordnet werden. Damit wird die erfindungsgemässe Aufgabe erfüllt, im Home-Bereich eines FTTH-Netzes entsprechende Datensignale in einem offenen System verfügbar zu machen.

In einer Ausführungsvariante der Anschlussdose ist das Wandlermodul als Verstärkermodul zum Verstärken des elektrischen Nutzsignals ausgebildet. Einer der Vorteile der Erfindung besteht nun darin, dass das verstärkte elektrische Nutzsignal, vorliegend ein RF-Signal zum Empfang von Fernseh- und/oder Radioprogrammen ausreichend stark ist, um damit mindestens ein Fernsehgerät, vorzugsweise jedoch mehrere Fernsehgeräte und/oder Radio mit Signal zu versorgen. Die kompakte Bauweise der Anschlussdose erlaubt dennoch, dass an der sog. F-Buchse eine Bandbreite von ca. 2' 400 MHz bei einem Ausgangspegel von ca. 85 dB zur Verfügung steht.

In einer anderen Ausführungsvariante der Anschlussdose sind zwei weitere Fasern der faseroptischen Verbindung mit jeweils einem entsprechenden faseroptischen Verbindungsanschluss der Anschlussdose verbunden, wobei im Betrieb mittels der weiteren Fasern ein entsprechendes optisches Übertragungsband ungefiltert verfügbar ist. Einer der Vorteile der Erfindung besteht darin, dass die Anschlussdose in der vorgeschlagenen Grundausstattung eine optoelektronische Empfangseinheit und entsprechende optische Teilbänder bereitstellt und gleichzeitig offen steht, um beliebigen Dritten, bspw. Telekomanbietern, weitere Verbindungsanschlüsse für zwei weitere faseroptische Verbindungen bereitzustellen. Die Anschlussdose ist somit modular und flexibel ausgebildet. Es können offene Standards unterstützt werden.

In einer weiteren Ausführungsvariante der Anschlussdose ist diese als Aufputzdose realisiert. Einer der Vorteile der Erfindung besteht darin, dass die Anschlussdose praktisch uneingeschränkt an einer Gebäudewand auch nachträglich montierbar ist. Dadurch wird FTTH auch in Altbauten schneller realisierbar. Die Dose kann durch ihr schlichtes Design problemlos mit bestehenden Schalter- und/oder Taster- und/oder Steckdosen kombiniert werden bzw. neben diese montiert werden kann.

In einer Ausführungsvariante der Anschlussdose weist die Anschlussdose zweimal die Grösse 1, bspw. 148 mm x 88 mm x 25 mm, auf. Als Grösse 1 wird üblicherweise eine Dose mit den Abmessungen 88 mm x 88 mm in Breite und Länge bezeichnet. Einer der Vorteile der Erfindung besteht darin, dass die Anschlussdose aufgrund des kompakten Design und der geringen Abmessungen problemlos mit bestehenden Schalter- und/oder Taster- und/oder Steckdosen kombiniert bzw. neben diese montiert werden kann.

In einer anderen Ausführungsvariante der Anschlussdose ist der Verbindungsanschluss der Anschlussdose als RF Steckverbinder ausgebildet ist. Einer der Vorteile der Erfindung besteht darin, dass mittels des RF Steckverbinders direkt und ohne kostenaufwändige Signalumwandlung ein Fernsehgerät oder Videorekorder an der Anschlussdose anschliessbar ist. Am RF Steckverbinder können auch weitere Radio- und/oder Fernsehanschlussdosen oder Multimediaverteilnetze in einer Wohnung angeschlossen werden.

In einer weiteren Ausführungsvariante der Anschlussdose ist der Verbindungsanschluss zum Bereitstellen des elektrischen Nutzsignals als RF Steckverbinder ausgebildet. Einer der Vorteile der Erfindung besteht darin, dass die Anschlussdose ohne zusätzliche Signalkonverter-, Signalumwandler- oder Signalverstärkermodule direkt mit einem Fernsehgerät verbunden werden kann. Die Anschlussdose ist als kostengünstiges Bauteil realisierbar. Dies vereinfacht die Umstellung von konventionellen Koaxialverkabelungen auf FTTH-Netzwerke, unter Verwendung erfindungsgemässer Anschlussdosen.

In einer Ausführungsvariante der Anschlussdose umfasst die Anschlussdose mindestens zwei Wickelträger zum Aufwickeln von Überlänge optischer Fasern, wobei der Durchmesser des Wickelträgers mindestens 3 cm beträgt. Einer der Vorteile der Erfindung besteht darin, dass selbst bei geringer Abmessungen der Anschlussdose in Breite, Länge und Tiefe und mit integrierter optoelektronischer Empfangseinheit genügend Freiraum zum Aufwickeln von Reservelänge der optischen Fasern vorhanden ist.

In einer anderen Ausführungsvariante der Anschlussdose umfasst das optische Übertragungsband drei Teilbänder in einem Wellenlängenbereich von 1310 nm bis 1550 nm, wobei das erste optische Teilband 1550 nm beträgt und wobei zwei weitere optische Teilbänder 1310 nm bzw. 1490 nm betragen, wobei das erste Teilband der Empfangseinheit zugeführt ist und dass die weiteren Teilbänder mittels faseroptischer Verbindung dem Verbindungsanschluss der Anschlussdose zugeführt sind. Einer der Vorteile der Erfindung besteht darin, dass die Teilbänder, welche von der Empfangseinheit zwecks Umwandlung in ein elektrisches Nutzsignal, bspw. Fernsehsignal, nicht verwendet werden, an einem Verbindungsanschluss der Anschlussdose verfügbar sind. Dadurch wird die Anschlussdose interessant für Dritte, welche basierend auf den weiteren Teilbändern der einen Faser weitere bzw. eigene Information übermitteln, bspw. IP-Telefonie oder dergleichen mehr.

In einer weiteren Ausführungsvariante der Anschlussdose umfasst diese einen wiederentfernbaren Modulträger für eine Kupplung, vorzugsweise eine RJ-45 Kupplung zur Verwendung für drahtgebundene analoge Telefonie. Einer der Vorteile der Erfindung besteht darin, dass die Anschlussdose im Übergang von konventioneller drahtgebundener Kommunikation zu FTTH-Netzen übergangsweise entsprechende Verbindungsanschlüsse bzw. Kupplungen bereitstellt. So kann an derselben Anschlussdose mittels einer RJ-45 Kupplung kupferdrahtgebundene Telefonie gleichsam mit FTTH-Netzverbindungen an entsprechenden Verbindungsanschlüssen sowie analogem Fernsehen angeboten werden.

In einer Ausführungsvariante der Anschlussdose weist diese eine Steckverbindung auf, mittels welcher die Empfangseinheit mit einer externen Spannungsversorgung verbunden ist. Einer der Vorteile der Erfindung besteht darin, dass die Anschlussdose aufgrund der externen Spannungsversorgung in verschiedenen Ländern verwendbar ist. Die Anschlussdose ist somit flexibel aufgebaut und daher kostengünstig realisierbar.

Im Folgenden wird die Erfindung anhand von in den Zeichnungen dargestellten Ausführungsbeispielen näher erläutert. Hierbei gehen aus den Zeichnungen, ihrer Beschreibung und den abhängigen Ansprüche weitere wesentliche Merkmale und Vorteile der Erfindung hervor.
Fig. 1 zeigt ein schematisches Blockschaltbild einer Anschlussdose;
Fig. 2 zeigt eine Detailansicht der Empfangseinheit der Anschlussdose aus Figur 1;
Fig. 3 zeigt eine vereinfacht dargestellte Ansicht eines geöffneten erfindungsgemässen Gehäuses für die Anschlussdose;
Fig. 4 zeigt eine Ansicht der Rückseite des Gehäuses aus Figur 3, wobei eine Montageplatte mit vorgefertigten Montageöffnungen ersichtlich ist;
Fig. 5 zeigt eine Vorderansicht des Gehäuses aus Figur 3 mit einer ästhetischen Abdeckung;
Fig. 6 zeigt das Gehäuse der Anschlussdose in einer Explosionsdarstellung; und
Fig. 7a bis Fig. 7f zeigen das Gehäuse der Anschlussdose aus verschiedenen Ansichten.

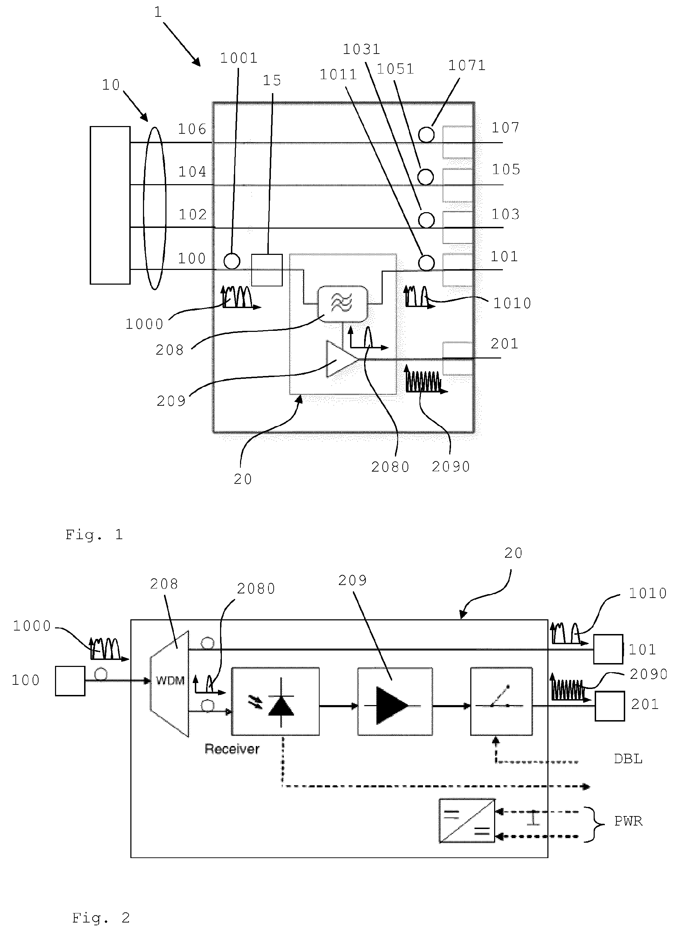

Figur 1 illustriert eine Anschlussdose 1 für faseroptische Verbindung 10 eines glasfaserbasierten Verteilnetzes Fiber-To-The-Home, FTTH, mit mindestens einem optischen Leiter 100, welcher zur Übertragung von Datensignalen mittels Wellenlängenmultiplexverfahren auf optischen Übertragungskanälen eines Übertragungsbands 1000 ausgebildet ist, wobei der optische Leiter mit einem Verbindungsanschluss 101 der Anschlussdose 1 verbindbar ist. Die optoelektronische Empfangseinheit 20 ist eingangsseitig mit dem von der faseroptischen Verbindung 10 kommenden optischen Leiter 100 verbunden und ausgangsseitig mittels optischem Leiter mit dem Verbindungsanschluss 101 verbunden.

Figur 2 illustriert ein Blockschaltbild der Empfangseinheit 20 der erfindungsgemässen Anschlussdose 1. Die Empfangseinheit 20 ist als sog. optical CATV receiver (OCR) ausgebildet. Der Begriff CATV wird vorliegend für Kabelfernsehen verwendet, bei welchem Bild- und Tonsignale über ein Breitbandkabel übertragen werden. Die Empfangseinheit 20 umfasst ein Filtermodul 208 zum Filtern des optischen Übertragungsbands 1000 in ein erstes optisches Teilband 2080 und mindestens ein weiteres optisches Teilband 1010, wobei die Empfangseinheit 20 zum Bereitstellen des weiteren optischen Teilbands mit einem Verbindungsanschluss 101 der Anschlussdose 1 verbunden ist.

Das Filtermodul der OCR Empfangseinheit weist eine Bandbreite von 2.4 GHz bei typischen 46 dB Träger-Rausch-Verhältnis (common noise ratio, CNR) für das Farbsystem NTSC auf. Der optische Modulationsindex (OMI) beträgt bei einem optischen Eingang von -8 dBm bei 1550 nm Leistung 4%. Der RF Ausgangssignal beträgt ca. 20 dBmV (-5 dBm, 1550 nm, OMI beträgt 4%).

Das Wandlermodul 209 der Empfangseinheit 20 generiert im Betrieb ein entsprechendes elektrisches Nutzsignal 2090 basierend auf dem optischen Datensignal des gefilterten ersten Teilbands 2080. Dabei ist die Empfangseinheit 20 zum Bereitstellen des elektrischen Nutzsignals 2090 mit einem Verbindungsanschluss 201 der Anschlussdose 1 verbunden.

Die hier vorzugsweise verwendeten Leistungskennzahlen der Empfangseinheit 20 können je nach Situation durch eine Empfangseinheit mit abweichenden Kennzahlen ersetzt werden, sofern die Baugrösse gleich gross oder kleiner ist. Die Wärmeabfuhr wird durch den Gehäusekörper gewährleistet. Bei geringem Strombedarf ist eine kleine Baugrösse realisierbar. Die Empfangseinheit umfasst vorzugsweise zwei single-mode optical fibre (SMF) Pigtails, wobei eine Faser bzw. ein Pigtail am Eingang und eine Faser bzw. ein Pigtail am Ausgang der Empfangseinheit 20 vorhanden sind. Als Pigtail wird üblicherweise ein kurzes Stück Lichtwellenleiter bezeichnet, welches einseitig mit einem Lichtwellenleiter-Stecker, bspw. SC-, LC- oder kompatiblen Steckverbinder, vorkonfektioniert ist.

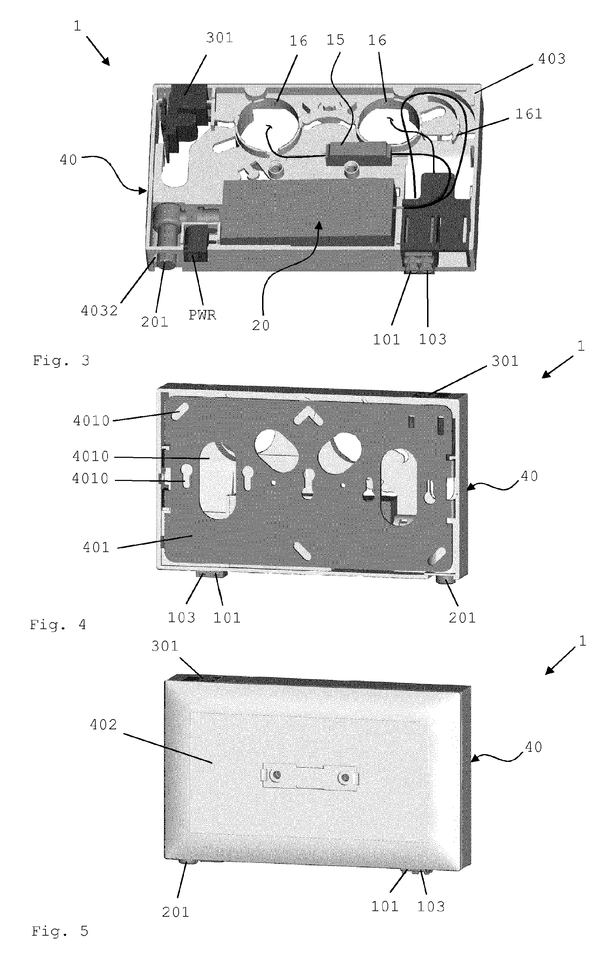

Figur 3 illustriert eine vereinfacht dargestellte Ansicht des geöffneten Gehäuses 40 der Anschlussdose 1. Im Gerippe des Gehäusekörpers 403 ist die optoelektronische Empfangseinheit 20 angeordnet und durch Befestigungsmittel, vorzugsweise Schnappelemente oder Befestigungsbügel festgehalten. Die Empfangseinheit kann auch durch Kleben oder Kabelbinder am Gehäusekörper befestigt werden. Der RF Ausgang der Empfangseinheit wird als Kupplung 201 durch die Öffnung 4032 eines seitlichen Rahmenelements 4031 des Gehäuses 40 herausgeführt. Die Anschlussdose 1 weist eine Steckverbindung auf, mittels welcher die Empfangseinheit 20 mit einer externen Spannungsversorgung PWR verbunden ist. Die erfindungsgemässe Anschlussdose 1 weist des weiteren eine Öffnung auf, bei welcher bis zu vier Verbindungsanschlüsse 101, 103,... für optische Verbindungen bereitgestellt werden. Vorzugsweise sind LC- oder SC-Steckerverbinder konfektioniert. Die Steckerverbinder sind vorliegend in einem wiederentfernbaren Schlitten oder Schieber angeordnet, um die Handhabung beim Konfektionieren zu erleichtern. Die Steckerverbinder können jedoch auch direkt mit dem Gehäuse lösbar verbunden sein. Mit den Bezugszeichen 16 und 161 sind Wickelträger oder Wickelträgerelemente bezeichnet. Diese dienen dazu, Überlängen bzw. Reservelängen der optischen Fasern aufzuwickeln. Deren Radius beträgt vorzugsweise mindestens 15 mm. Das Bezugszeichen 15 bezeichnet einen Simplex LC- bzw. LCkompatible Steckerverbinder oder SC-Steckerverbinder zum Verbinden optischer Fasern. Das Bezugszeichen 301 bezeichnet eine RJ-45 Kupplung für kabelgebundene Telefonie. Dabei können die Kupferkabel eines herkömmlichen Telefonanschlusses durch eine Öffnung im Gehäusekörper 403 durchgeführt und mit der Kupplung 301 der Anschlussdose 1 verbunden werden.

Figur 4 illustriert eine Ansicht der Rückseite der erfindungsgemässen Anschlussdose 1, wobei eine Montageplatte 401 mit vorgefertigten Montageöffnungen, bspw. Bohrungen für Montageschrauben oder -haken ersichtlich ist. Die Montageplatte 401 ist wiederentfernbar mit dem Gehäuse 40 der Anschlussdose verbunden. Das Bezugszeichen 4010 bezeichnet eine bzw. mehrere Öffnungen oder Bohrungen der Montageplatte 401. Die Montageplatte weist seitlich gegenüberliegende Lappen oder Lippen auf, welche beim Montieren des Gehäuses 40 führend in dessen Gehäusekörper eingreifen. Aus dem Gehäuse 40 der Anschlussdose 1 herausgeführt sind der elektrische Verbindungsanschluss 201 des Kabelfernsehsignals, Verbindungsanschlüsse 101,103 für optische Leiter sowie die RJ-45 Kupplung für drahtgebundene Telefonie.

Figur 5 illustriert eine Vorderansicht der Anschlussdose 1 mit einer ästhetischen Blindabdeckung 402 zum Verschliessen des Gehäuses 40 sowie zum Schutz vor Verschmutzung oder Manipulation.

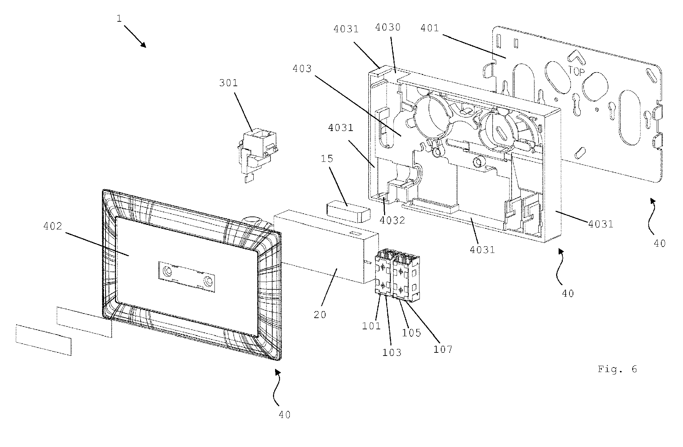

Figur 6 illustriert die Anschlussdose 1 in einer Explosionsdarstellung. Die Anschlussdose 1 umfasst ein mit dem Bezugszeichen 40 bezeichnetes mehrteiliges Gehäuse mit einem Gehäusekörper 403 mit seitlichen Rahmenelementen 4031, eine Gehäuserückwand 401 und eine Gehäuseabdeckplatte 402. Aus dem Gehäuse 40 sind optische Verbindungsanschlüsse 101, 103,... für die faseroptische Verbindung eines glasfaserbasierten Verteilnetzes (Fiber-To-The-Home, FTTH) herausgeführt. Die Verbindungsanschlüsse sind als ST, SC oder kompatible Steckertypen ausgebildet. Der Gehäusekörper 403 umfasst Aufnahme- und/oder Befestigungsmittel für eine optoelektronische Empfangseinheit 20 der Anschlussdose 1. Zudem weist das Gehäuse mindestens eine Öffnung 4032 zum Herausführen eines elektrischen Verbindungsanschlusses 201 der Empfangseinheit 20 aufweist. Die Aufnahme- und/oder Befestigungsmittel des Gehäusekörpers 403 sind als Rippen- oder Stegelemente ausgebildet und dienen der Aufnahme der Empfangseinheit 20. Der Gehäusekörper 403, die Gehäuserückwand 401 und die Gehäuseabdeckplatte 402 sind lösbar mittels Verbindungsmitteln, bspw. Schrauben oder Schnappverbindungen, miteinander verbunden.

Gehäusekörper 403 und Gehäuseabdeckplatte 402 sind vorzugsweise aus Kunststoff gebildet, bspw. im Spritzgussverfahren geformt. Die Gehäuserückwand 401 ist vorzugsweise aus einer metallenen Platte geformt, bspw. aus Blech und dient als Montageplatte. Sie weist mehrere Bohrungen bzw. Durchgangslöcher zum Durchführen von Lichtwellenleitern und von Kupferleitungen für Telefonie auf. Zudem dienen die Bohrungen zum Befestigen der Anschlussdose 1 an einer Montageebene, bspw. einer Gebäudewand. Das Gehäuse 40 wird für eine Anschlussdose 1 eines Fiber-To-The-Home Netzes mit einem zusätzlichen Anschluss für einen analogen Fernsehanschluss verwendet.

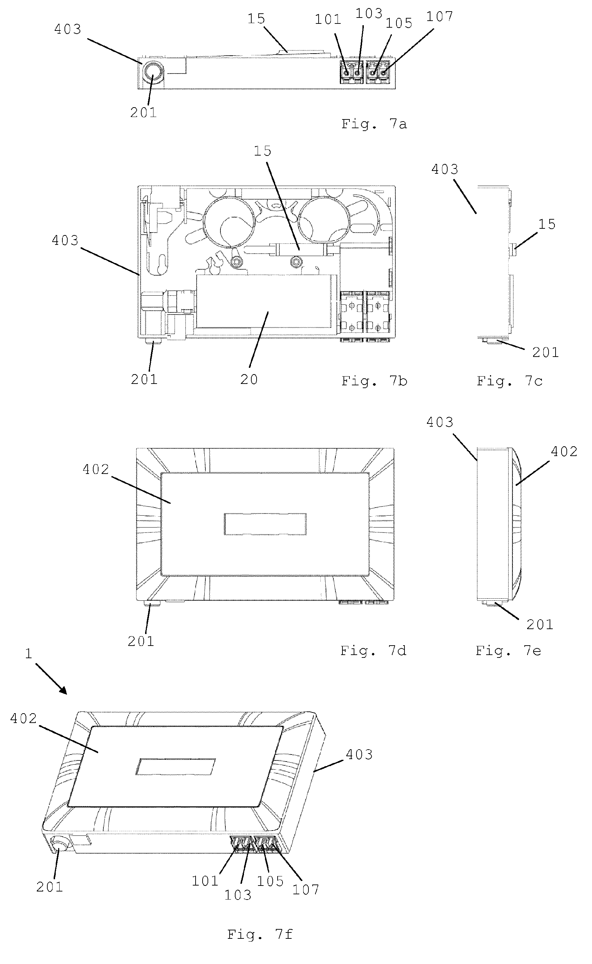

Figuren 7a bis 7f illustrieren die Anschlussdose in einer Ansicht der Längsseite (Figur 7a), einer Aufsicht auf die abgedeckte Anschlussdose (Figur 7b), einer Seitenansicht (Figur 7c), einer Aufsicht der gedeckten Anschlussdose (Figur 7d), einer Seitenansicht der Anschlussdose mit aufgesetztem Gehäuseabdeckung bzw. Haube, Blende oder Deckel (Figur 7e) sowie einer perspektivischen Ansicht der Anschlussdose (Figur 7f).

Weiter kann das erfindungsgemässe Gehäuse für folgende Ausführungsbeispiele von Anschlussdosen vorgesehen sein:
Ausführungsbeispiel 1 ist eine Anschlussdose für faseroptische Verbindung eines glasfaserbasierten Verteilnetzes , mit mindestens einem optische Leiter , welcher zur Übertragung von Datensignalen mittels Wellenlängenmultiplexverfahren auf optischen Übertragungskanälen eines Übertragungsbands ausgebildet ist, wobei
   der optische Leiter mit einem Verbindungsanschluss der Anschlussdose verbindbar ist,
   die Anschlussdose eine mit dem optischen Leiter verbundene optoelektronische Empfangseinheit umfasst, welche ein Filtermodul zum Filtern des optischen Übertragungsbands in ein erstes optisches Teilband und mindestens ein weiteres optisches Teilband umfasst, wobei die Empfangseinheit zum Bereitstellen des weiteren optischen Teilbands mit einem Verbindungsanschluss der Anschlussdose verbunden ist,
   die Empfangseinheit ein Wandlermodul zum Generieren eines entsprechenden elektrischen Nutzsignals basierend auf dem optischen Datensignal des gefilterten ersten Teilbands umfasst, wobei die Empfangseinheit zum Bereitstellen des elektrischen Nutzsignals mit einem Verbindungsanschluss der Anschlussdose verbunden ist,
   mindestens einem weiteren optischen Leiter der faseroptischen Verbindung durch die Anschlussdose hindurch schlaufbar ist und mit einem faseroptischen Verbindungsanschluss derselben verbunden ist, wobei im Betrieb mittels des weiteren optischen Leiters ungefiltertes optisches Übertragungsband verfügbar ist.
Ausführungsbeispiel 2 ist eine Anschlussdose gemäss Ausführungsbeispiel 1, wobei das Wandlermodul als Verstärkermodul zum Verstärken des elektrischen Nutzsignals ausgebildet ist.
Ausführungsbeispiel 3 ist eine Anschlussdose gemäss Ausführungsbeispiel 1 oder 2, wobei zwei weitere optische Leiter der faseroptischen Verbindung mit jeweils einem entsprechenden faseroptischen Verbindungsanschluss der Anschlussdose verbunden sind, wobei im Betrieb mittels der weiteren Fasern ein entsprechendes optisches Übertragungsband ungefiltert verfügbar ist.
Ausführungsbeispiel 4 ist eine Anschlussdose gemäss eines der vorangehenden Ausführungsbeispiele 1 bis 3, wobei die Anschlussdose als Aufputzdose realisiert ist.
Ausführungsbeispiel 5 ist eine Anschlussdose gemäss eines der vorangehenden Ausführungsbeispiele 1 bis 4, wobei die Anschlussdose die zweimal Grösse 1, vorzugsweise 148 mm x 88 mm x 25 mm, aufweist.
Ausführungsbeispiel 6 ist eine Anschlussdose gemäss eines der vorangehenden Ausführungsbeispiele 1 bis 5, wobei der bzw. jeder faseroptische Verbindungsanschluss als LC Steckverbinder oder als SC Steckverbinder realisiert ist.
Ausführungsbeispiel 7 ist eine Anschlussdose gemäss eines der vorangehenden Ausführungsbeispiele 1 bis 6, wobei der Verbindungsanschluss zum Bereitstellen des elektrischen Nutzsignals als RF Steckverbinder ausgebildet ist.
Ausführungsbeispiel 8 ist eine Anschlussdose gemäss eines der vorangehenden Ausführungsbeispiele 1 bis 7, wobei die Anschlussdose mindestens zwei Wickelträger zum Aufwickeln von Überlänge optischer Leiter umfasst, wobei der Durchmesser des Wickelträgers mindestens 3 cm beträgt.
Ausführungsbeispiel 9 ist eine Anschlussdose gemäss eines der vorangehenden Ausführungsbeispiele 1 bis 8, wobei das optische Übertragungsband drei Teilbänder in einem Wellenlängenbereich von 1310 nm bis 1550 nm umfasst, wobei das erste optische Teilband 1550 nm beträgt und wobei zwei weitere optische Teilbänder 1310 nm bzw. 1490 nm betragen, dass das erste Teilband der Empfangseinheit zugeführt ist und dass die weiteren Teilbänder mittels faseroptischer Verbindung dem Verbindungsanschluss der Anschlussdose zugeführt sind.
Ausführungsbeispiel 10 ist eine Anschlussdose gemäss eines der vorangehenden Ausführungsbeispiele 1 bis 9, wobei die Anschlussdose einen wiederentfernbaren Modulträger für eine Kupplung umfasst, vorzugsweise eine RJ-45 Kupplung zur Verwendung für drahtgebundene analoge Telefonie.
Ausführungsbeispiel 11 ist eine Anschlussdose gemäss eines der vorangehenden Ausführungsbeispiele 1 bis 10, die Anschlussdose eine Steckverbindung aufweist, mittels welcher die Empfangseinheit mit einer externen Spannungsversorgung verbunden ist.

### Bezugszeichenlegende

- 1: Anschlussdose
- 10: Faseroptische Verbindung, Lichtleiter, Glasfaser
- 100: Faser für optische Nutzsignale
- 1000: Übertragungsband
- 1001: optischer Leiter, Faser
- 101: Verbindungsanschluss
- 1010: Teilband, Restband
- 1011: optischer Leiter, Faser
- 102: Faser für optische Nutzsignale
- 103: Verbindungsanschluss
- 1031: optischer Leiter, Faser
- 104: Faser für optische Nutzsignale
- 105: Verbindungsanschluss
- 1051: optischer Leiter, Faser
- 106: Faser für optische Nutzsignale
- 107: Verbindungsanschluss
- 1071: optischer Leiter, Faser
- 15: Kupplung, Steckverbinder, Verbindungsanschluss
- 16: Wickelträger, Schlaufe

- 20: optoelektronischer Konverter, Empfangseinheit
- 201: Verbindungsanschluss
- 208: Filtermodul
- 2080: Teilband
- 209: Verstärkermodul
- 2090: elektrisches Nutzsignal

- 301: Kupplung, Steckverbinder

- 40: Gehäuse
- 401: Montageplatte
- 4010: Öffnung, Bohrung
- 402: Gehäuseabdeckung, Abdeckung, Blindabdeckung
- 403: Gehäuserahmen, Gehäusekörper
- 4030: Öffnung, Ausnehmung
- 4031: Seitenwand, seitliches Rahmenelement
- 4032: Öffnung, Ausnehmung

- DBL: Output disable, Ausschaltfunktion
- PWR: Powerunit, Stromversorgungseinheit

## Patentansprüche

1. Gehäuse einer Anschlussdose (1) mit mindestens einem Verbindungsanschluss (101) für faseroptische Verbindung (10) eines glasfaserbasierten Verteilnetzes (Fiber-To-The-Home, FTTH), wobei das Gehäuse (40) einen Gehäusekörper (403) mit seitlichen Rahmenelementen (4031), eine Gehäuserückwand (401) und eine Gehäuseabdeckplatte (402) umfasst, **dadurch gekennzeichnet, dass**:
- der Gehäusekörper (403) Aufnahme- und/oder Befestigungsmittel für eine optoelektronische Empfangseinheit (20) der Anschlussdose (1) umfasst und
- das Gehäuse mindestens eine Öffnung (4032) zum Herausführen eines elektrischen Verbindungsanschlusses (201) der Empfangseinheit (20) aufweist.

2. Gehäuse gemäss Anspruch 1, **dadurch gekennzeichnet, dass** die Aufnahme- und/oder Befestigungsmittel des Gehäusekörpers (403) als Schalen-, Rippen- oder Stegelemente ausgebildet sind.

3. Gehäuse gemäss einem der vorgenannten Ansprüche 1 oder 2, **dadurch gekennzeichnet, dass** Gehäusekörper (403), Gehäuserückwand (401) und Gehäuseabdeckplatte (402) lösbar mittels Verbindungsmitteln, bspw. Schrauben oder Schnappverbindungen, miteinander verbunden sind

4. Gehäuse gemäss einem der vorgenannten Ansprüche 1 bis 3, **dadurch gekennzeichnet, dass** die Gehäuserückwand (401) zur Montage des Gehäuses (40) als metallische Montageplatte mit mehreren Bohrungen ausgebildet ist.

5. Verwendung eines Gehäuses (40) nach einem der Ansprüche 1 bis 4 für eine Anschlussdose (1) für faseroptische Verbindung (10) eines glasfaserbasierten Verteilnetzes (Fiber-To-The-Home, FTTH), mit mindestens einem optische Leiter (100), welcher zur Übertragung von Datensignalen mittels Wellenlängenmultiplexverfahren auf optischen Übertragungskanälen eines Übertragungsbands (1000) ausgebildet ist, wobei
- der optische Leiter mit einem Verbindungsanschluss (101) der Anschlussdose (1) verbindbar ist,
- die Anschlussdose (1) eine mit dem optischen Leiter (100) verbundene optoelektronische Empfangseinheit (20) umfasst, welche ein Filtermodul (208) zum Filtern des optischen Übertragungsbands (1000) in ein erstes optisches Teilband (2080) und mindestens ein weiteres optisches Teilband (1010) umfasst, wobei die Empfangseinheit (20) zum Bereitstellen des weiteren optischen Teilbands mit einem Verbindungsanschluss (101) der Anschlussdose (1) verbunden ist,
- die Empfangseinheit (20) ein Wandlermodul (209) zum Generieren eines entsprechenden elektrischen Nutzsignals (2090) basierend auf dem optischen Datensignal des gefilterten ersten Teilbands (2080) umfasst, wobei die Empfangseinheit (20) zum Bereitstellen des elektrischen Nutzsignals (2090) mit einem Verbindungsanschluss (201) der Anschlussdose (1) verbunden ist, und
- mindestens einem weiteren optischen Leiter (102) der faseroptischen Verbindung (10) durch die Anschlussdose hindurch schlaufbar ist und mit einem faseroptischen Verbindungsanschluss (103) derselben verbunden ist, wobei im Betrieb mittels des weiteren optischen Leiters ungefiltertes optisches Übertragungsband verfügbar ist.
